Europäisches Patentamt

European Patent Office

Office européen des brevets

(19)

(11) **EP 1 069 358 A2**

(12) **EUROPEAN PATENT APPLICATION**

(43) Date of publication:
17.01.2001 Bulletin 2001/03

(51) Int. Cl.⁷: **F16K 31/06**

(21) Application number: **00115113.3**

(22) Date of filing: **12.07.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **15.07.1999 JP 20229899**
**30.09.1999 JP 28076399**

(71) Applicants:
• **Kabushiki Kaisha Toyoda Jidoshokki Seisakusho**
**Aichi-ken 448-8671 (JP)**
• **NOK Corporation**
**Tokyo-to, 105-0012 (JP)**

(72) Inventors:
• **Hirata, Ichiro,**
**Nok Corporation**
**Fujisawa-shi, Kanagawa-ken 251-0042 (JP)**
• **Uemura, Norio,**
**Nok Corporation**
**Fujisawa-shi, Kanagawa-ken 251-0042 (JP)**

• **Nagayoshi, Kazuaki,**
**Nok Corporation**
**Fujisawa-shi, Kanagawa-ken 251-0042 (JP)**
• **Watanabe, Kouji,**
**Nok Corporation**
**Fujisawa-shi, Kanagawa-ken 251-0042 (JP)**
• **Fukunaga, Shuji,**
**Nok Corporation**
**Fujisawa-shi, Kanagawa-ken 251-0042 (JP)**
• **Nishinosono, Hiroyuki,**
**Nok Corporation**
**Fujisawa-shi, Kanagawa-ken 251-0042 (JP)**
• **Kawaguchi, Masahiro,**
**c/o K.K. Toyoda Jidoshokki**
**Kariya-shi, Aichi-ken, 448-8671 (JP)**
• **Kimura, Kazuya,**
**c/o K.K. Toyoda Jidoshokki**
**Kariya-shi, Aichi-ken, 448-8671 (JP)**

(74) Representative:
**Hoeger, Stellrecht & Partner**
**Uhlandstrasse 14 c**
**70182 Stuttgart (DE)**

(54) **Solenoid valve**

(57)  A solenoid-side rod 5c, a bellows-side rod 5e and a valve 3b are formed as a valve rod 5 in the form of a unitary structure. The valve rod 5 is connected to a plunger 2b. The valve rod 5 is slidably supported at two points at portions corresponding to the bellows-side rod 5e and the plunger 2b.

Fig.1

EP 1 069 358 A2

**Description**

BACKGROUND OF THE INVENTION

1. Field of the Invention

The present invention relates to a solenoid valve. More specifically, the invention relates to technology for improving the operating stability and control characteristics of the solenoid valve.

2. Description of the Related Art

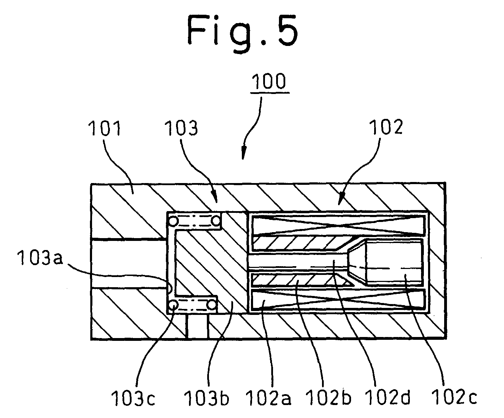

Fig. 5 is a diagram schematically illustrating the fundamental constitution of a conventional solenoid valve. The solenoid valve 100 is constituted by concentrically arranging a solenoid unit 102 and a valve unit 103 in a cylindrical valve body 101.

The solenoid unit 102 includes a coil 102a that generates magnetic flux upon being supplied with an electric current, a center post 102b for converging the magnetic flux generated by the coil 102a, a plunger 102c that is moved in the axial direction by being magnetically pulled by the center post 102b, and a rod 102d that transmits the driving force of the plunger 102c.

The valve unit 103 includes a valve 103b that comes in contact with, and separates away from, the valve seat 103a. The valve 103b is urged by a spring 103c in a direction in which it opens, and is urged by the rod 102d when an electric current is supplied to the coil 102a to move in a direction in which it closes, thereby to control the fluid.

The solenoid valves of this kind can be roughly divided into those which turn on or off the fluid that is to be controlled in a state where the valve is either opened or closed, and those which proportionally control (current - pressure or flow rate) the pressure and flow rate by varying the opening area of the valve unit by changing the stroke position of the valve (plunger) depending upon the applied voltage.

Fig. 5 illustrates a valve, that is suited for accomplishing proportional control, in which the opposing surfaces of the center post 102b and the plunger 102c have conical shapes to obtain such characteristics that the thrust remains constant, for a given electric current, even though the plunger undergoes a movement.

Solenoid valves of the on/off control type and of the proportional control type are operated under the conditions described below.

(On/off control solenoid valve)

The on/off control solenoid must be turned off with a current smaller than an open current (valve-opening current in the case of Fig. 5) and must be turned on with a current larger than an operation current (valve-closing current).

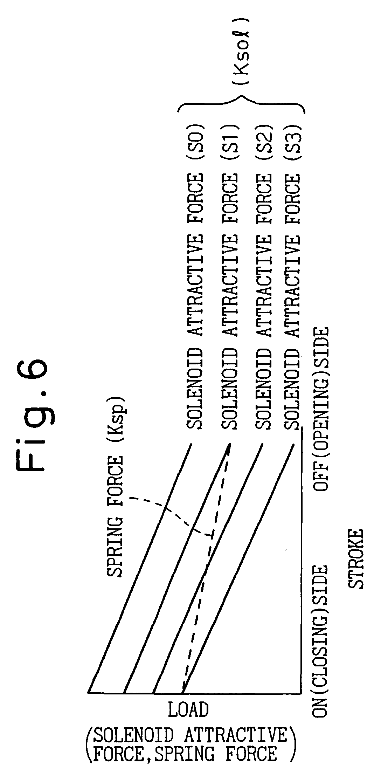

Therefore, the relationship between the spring 103c and the attractive force of the solenoid must be such that the inclination (Ksol) of the attractive force of the solenoid > spring constant (Ksp), as shown in Fig. 6.

The spring constant shows the inclination of the spring force.

Fig. 6 is a graph illustrating a relationship between the load applied to the valve and the valve position in the on/off control solenoid, wherein the abscissa represents the stroke (moving amount) of the valve and the ordinate represents the load formed by the spring force depending on the stroke position of the valve and the solenoid attractive force (the directions are opposite to each other). At a position where the solenoid attractive force is greater than the spring force, the valve moves toward the on (closing) side and in the opposite case, the valve moves toward the off (opening) side.

The solenoid attractive forces S0 to S3 vary depending upon the current flowing into the coil. Described below are the operation conditions with each of the attractive forces.

① When the solenoid attractive force is S0, the solenoid produces a larger attractive force than the spring force over the whole stroke, and the valve moves toward the on side and is held.

② When the current is decreased from the state ①, the spring force becomes greater at the on position when the solenoid attractive force becomes smaller than S3, and the valve moves toward the off side. In this state, the spring force is greater over the whole stroke than the solenoid attractive force, and the valve moves at once to the off end.

③ When the current is increased again, the valve starts moving toward the on side when the solenoid attractive force becomes larger than S1, and the valve moves at one time to the on end contrary to the state of ② .

④ When the solenoid attractive force lies between S1 and S3, the stroke is divided between on and off at a point where the spring force intersects a boundary represented by the solenoid attractive force S2. The valve moves to the opening position when an off current is supplied and moves to the closing position when an on current is supplied, and never remains balanced at a neutral position.

(Proportional control solenoid valve)

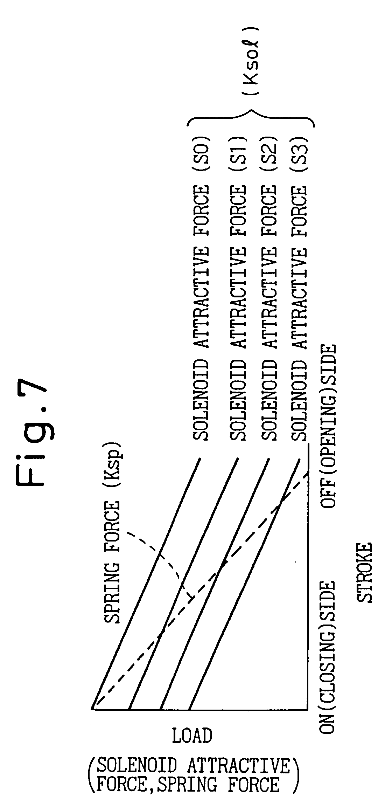

In the proportional control solenoid, on the other hand, the stroke (valve-opening amount in the case of Fig. 5) must be controlled to a given position depending upon the electric current and, hence, there must hold such a relationship that inclination (Ksol) of the solenoid attractive force < spring constant (Ksp), as shown in Fig. 7.

The spring constant shows the inclination of the spring force.

Fig. 7 is a graph illustrating, as in Fig. 6, a relationship between the load exerted on the valve and the valve position in the proportional control solenoid. In Fig. 7, an intersecting point of the solenoid attractive force and the spring force is a balanced position, and the amount of stroke of the valve at this moment is the valve-opening amount.

The solenoid attractive forces S0 to S3 vary depending upon the electric current supplied to the coil. Described below are the operation conditions with each of the attractive forces.

① When the solenoid attractive force is S0, the solenoid produces a larger attractive force than the spring force over the whole stroke, and the valve moves toward the on side and is held.

② When the electric current decreases from the state ①, the load exerted on the valve is balanced at an intersecting point of the solenoid attractive force and the spring force, and the amount of stroke of the valve at this moment is the valve-opening amount.

③ When the electric electric current further decreases, the stroke position is determined at the crossing point of the solenoid attractive force and the spring force, and the valve-opening amount increases. When the electric current increases, on the other hand, the valve-opening amount decreases.

④ The valve-opening amount can be adjusted by increasing or decreasing the electric current, and the valve can be controlled to any position.

Thus, the on/off control solenoid and the proportional control solenoid have the above-mentioned relationships of the inclination of the solenoid attractive force and the spring constant, and are used for different purposes.

In recent years, further, there has been proposed a solenoid valve 200, equipped with an automatic pressure-adjusting function, in which a load, produced by pressure response means that responds to the pressure of the control fluid and to the pressure such as atmospheric pressure, is exerted on the valve to change the stroke position depending upon the pressure.

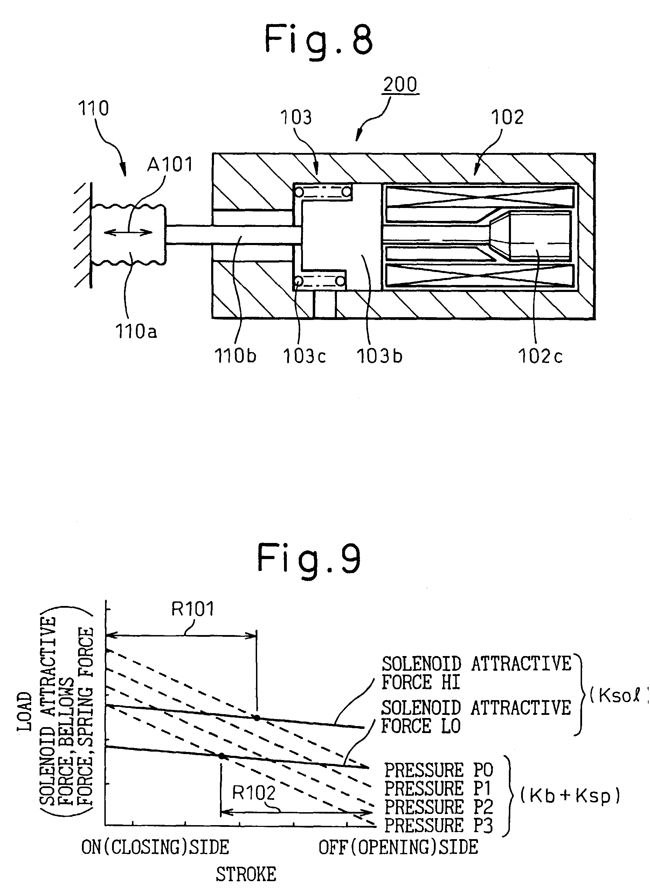

Fig. 8 is a schematic diagram illustrating the constitution of this solenoid valve 200 which is equipped with a sealed bellows assembly 110 (pressure response means) of which the interior is evacuated or has a predetermined pressure in addition to the constitution of the solenoid valve 100 of Fig. 5.

The bellows assembly 110 changes its length (direction of an arrow A101) depending upon a change in the compressive force caused by a pressure exerted on the exterior of the bellows 110a, and gives a load in the axial direction that varies depending upon the pressure in a state where the rod 110b is connected to the valve 103b.

The solenoid valve 200 is used, for example, as a capacity control valve of a variable capacity-type compressor employed in an air conditioning system of a vehicle.

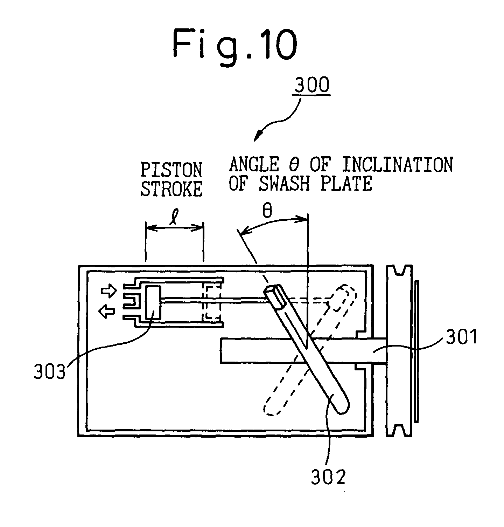

The variable capacity-type compressor may be a swash plate compressor which, as shown in Fig. 10, compresses a refrigerant by changing, into a reciprocal motion of the piston 303, the displacement in the axial direction of a swash plate 302 set to swing at a predetermined angle of inclination relative to a rotary shaft 301 which receives the rotational drive force from the engine of the vehicle.

In this compressor 300, the stroke of the piston 303 is determined depending upon the angle θ of inclination of the swash plate 302, and the amount of discharge of the refrigerant from the compressor 300 is determined per revolution of the rotary shaft 301. When the angle θ of inclination of the swash plate 302 is secured, therefore, the cooling ability varies depending upon a change in the rotational speed that is input.

It has therefore been attempted to adjust the cooling ability by changing the angle θ of inclination of the swash plate 302 to change the reciprocal stroke of the piston 303 depending upon the rotational speed of the swash plate 302 and the cooling ability that is required.

There exists a correlation between the blow-out temperature of the cooling air (it also varies depending upon the blow-out amount of the cooling air and its temperature before it is cooled) passing through an evaporator which exhibits an endothermic action as the refrigerant is vaporized and the pressure Ps of the refrigerant taken in by the compressor (the temperature of the cooling air increases with an increase in the suction pressure Ps, and decreases with a decrease in the suction pressure Ps). In adjusting the cooling ability, therefore, the angle of the swash plate is so controlled that the suction pressure Ps maintains a predetermined value.

In the solenoid valve 200, the length of the bellows 110a is varied depending upon the suction pressure Ps, so that the urging force of the bellows assembly 110 is transmitted to the valve 103b.

Due to the change in the urging force by the bellows assembly 110, the valve 103b is opened and closed, and the crank-case pressure Pc is controlled and the angle θ of inclination of the swash plate 302 is changed to obtain a desired suction pressure Ps.

Due to the above-mentioned operation, when the valve 103b is closed with a solenoid attractive force of a predetermined current, the bellows assembly 110 opens and closes the valve 103b by a small amount such that the suction pressure Ps is balanced with a predetermined constant pressure (constant blow-out temperature of the cooling air), whereby the angle θ of inclination of the swash plate 302 is changed to control the amount of discharging the refrigerant of the compressor 300.

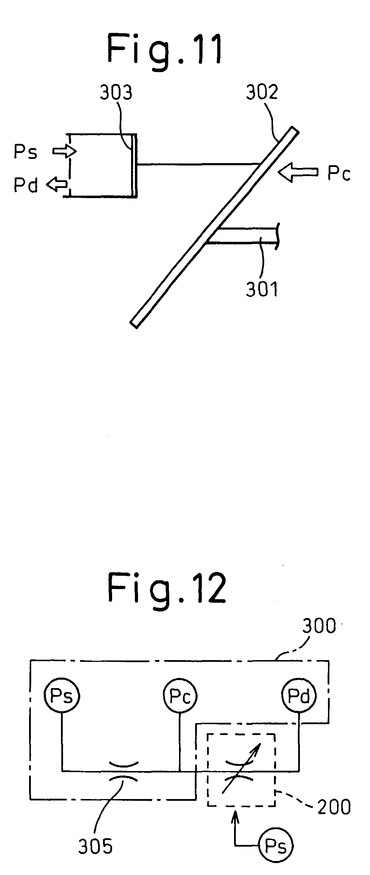

Referring to Fig. 11, the angle θ of inclination of the swash plate 302 of the compressor 300 is determined by the balancing of discharge pressure Pd of the compressor 300, crank-case pressure Pc and suction pressure PS. Therefore:

when PC is small (valve is closed), the angle θ of inclination becomes large, the discharge pressure Pd becomes large, and the suction pressure Ps becomes small (blow-out temperature of the cooling air is low); and
when Pc is large (valve is opened), the angle θ of inclination becomes small, the discharge pressure Pd becomes small, and the suction pressure Ps becomes large (blow-out temperature of the cooling air is high).

The ports at the above-mentioned pressures Pd, Pc, Ps of the compressor 300 and the solenoid valve 200 are connected as represented by a circuit shown in Fig. 12. The crank-case pressure Pc is connected to the suction pressure Ps through an orifice 305 in the compressor 300. When the operation of the compressor 300 continues to be halted (engine remains stopped, etc.), the pressure in the compressor becomes uniform.

In the above description, the balancing control for accomplishing a predetermined constant suction pressure Ps (constant blow-out temperature of the cooling air), is to adjust the suction pressure Ps by controlling the angle θ of inclination of the swash plate 302, such as moving the bellows assembly 110 toward the extending side to open the valve 103b when the suction pressure Ps is small and moving the bellows assembly 110 toward the contracting side to close the valve 103b when the suction pressure Ps IS large, in order to accomplish the predetermined suction pressure Ps.

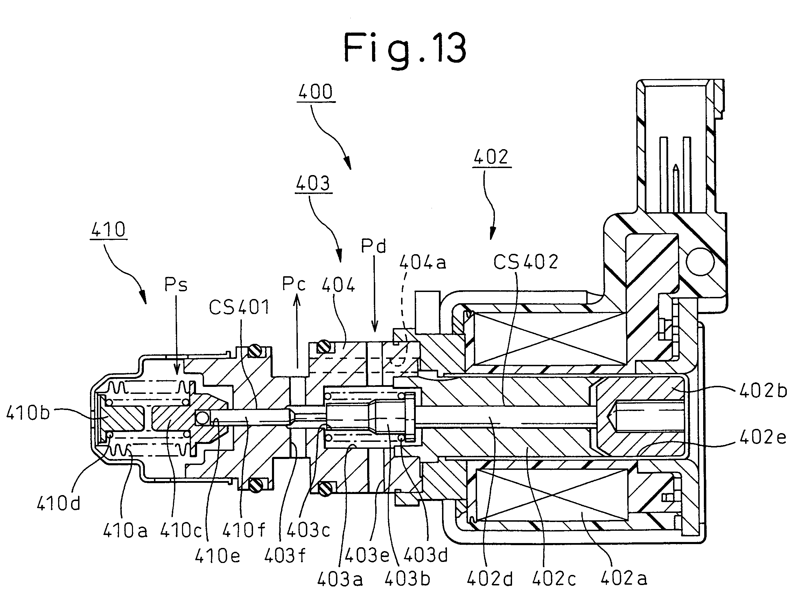

Fig. 13 illustrates a solenoid valve 400 which is a concrete example of the conventional solenoid valve 200 shown in Fig. 8.

The solenoid valve 400 is roughly constituted by a solenoid unit 402, a valve unit 403 and a bellows assembly 410.

The solenoid unit 402 is arranged at one end of a valve body 404 of nearly a cylindrical shape like the one that is generally used in the prior art. An electric current is supplied to a coil 402a to generate a magnetic force, whereby a plunger 402b is attracted by a center post 402c to generate an urging force (solenoid attractive force) of a magnitude corresponding to the current.

The valve unit 403 has a valve 403b in a valve chamber 403a formed in a valve body 404, the valve 403b being allowed to move in the axial direction in the valve chamber 403a so as to come in contact with, and separate away from, a valve seat 403c opened in the valve chamber 403a. Further, the valve 403b is urged by a spring 403d which is an urging means in a direction in which it opens, and is formed integrally with a rod 402d of the solenoid side.

A port 403e is connected to the valve chamber 403a of the valve unit 403, and a port 403f is connected to the valve seat 403c. The port 403f is guiding the crank chamber pressure Pc to the plunger chamber 402e through a communication passage 404a.

The bellows assembly 410 is arranged at the other end of the side opposite to the solenoid unit 402 of the valve body 404.

The bellows assembly 410 includes a sealed bellows core 410a of which the interior is evaluated or has a predetermined pressure, a stopper 410b for holding both ends of the bellows core 410a, and a spring 410d that extends inside the holder 410c and the bellows core 410a to produce an urging force and to prevent collapse.

The urging force in the opening direction is given to the valve 403b when the bellows assembly extends in response to the pressure (suction pressure Ps) surrounding the bellows core 410a in excess of a predetermined length (when the suction pressure Ps has dropped) via the rod 410f slidably held by the holder unit 410e.

Therefore, the bellows assembly 410 does not engage with the valve 403b throughout the whole stroke of the valve 403b to urge it, but is so constituted that at least the rod 410f and the valve 403b are brought into engagement from the position where the valve 403b is closed up to a position halfway in the stroke in response to the suction pressure Ps. If the valve-opening amount of the valve 403b is maintained, the bellows assembly 410 may be brought into engagement throughout the whole stroke.

When the suction pressure Ps is elevated in excess of a predetermined pressure, the bellows core 410a contracts, and the rod 410f and the valve 403b are no longer engaged with each other.

The compressor controlled by the solenoid valve 200 or the solenoid valve 400 equipped with the automatic pressure-adjusting function, is generally provided with an electromagnetic clutch which is turned on and off, to transmit the driving power to the rotary shaft that rotates the swash plate, i.e., to drive the compressor or not to transmit the driving power thereto, i.e., not to drive the compressor.

In recent years, however, there has been developed a clutchless compressor which rotates the swash plate at all times when the engine of the vehicle is in operation. In this clutchless compressor, the compressor is turned on and off not by connecting/disconnecting the clutch but by changing the angle of inclination of the swash plate.

That is, in a state where the angle of inclination is almost zero (in a completely zero state, no force is generated to change the inclination of the swash plate), the piston almost does not move, the refrigerant is not blown out, and an off state is established (where no load is exerted on the engine).

In the on state, an electric current is supplied to the solenoid valve to close the valve, the crank-case pressure Pc is decreased to be smaller than the discharge pressure Pd to increase the angle of inclination of the swash plate, whereby the discharging amount of the refrigerant is increased to operate the air-conditioning equipment.

In the clutchless compressor, therefore, the compressor is turned on and off by opening and closing the valve of the solenoid valve. In other words, the solenoid valve must possess two functions, i.e., the function for opening and closing (on/off controlling) the valve for turning the compressor on and off, and a function of proportional control for adjusting the suction pressure Ps.

Fig. 9 is a graph illustrating a relationship between the load exerted on the valve and the valve position in the solenoid valve 200 equipped with a function for automatically adjusting the pressure. In Fig. 9, an intersecting point of the solenoid attractive force (between the solid lines HI and LO) and the bellows force and spring force (broken lines) is a balance position, and the amount of stroke of the valve at this moment is a valve-opening amount.

That is, in the bellows assembly 110, the load given to the valve changes depending upon a change in the external pressure (suction pressure Ps) and, hence, Kb + Ksp undergoes parallel translation depending upon the external pressures (P0 (low pressure) to P3(high pressure)), and the intersecting position with the solenoid attractive force generated by predetermined current becomes a valve-opening amount.

In this case, when the spring 103c has a spring constant Ksp, the bellows assembly 110 has a spring constant Kb, the inclination of the solenoid attractive force is Ksol, and Kb + Ksp < Ksol (similar to the one where Ksp is set as Kb + Ksp in Fig. 6), then, the valve is settled in a closed state or in an opened state depending upon a change in the solenoid attractive force produced by an electric current; i.e., a balancing control is not accomplished at an intermediate position. To execute the balancing control (linear control), therefore, a relation Kb + Ksp > Ksol is set as shown in Fig. 9.

Upon setting the relationship Kb + Ksp > Ksol as described above, the automatic pressure adjustment is accomplished in the region R101 of the stroke on the side on where the valve is closed and in the region R102 on the side on where the valve is opened with respect to the solenoid attractive forces HI and LO.

However, when the constant Kb + Ksp is set as shown in Fig. 9, the solenoid attractive force must be equal to, or larger than, HI to close the valve by the on/off control. Therefore, the solenoid must produce a large attractive force in a state where the center post and the plunger are separated away from each other.

When the attractive force is smaller than the above value, the valve may be balanced at an intermediate position, causing a problem with the solenoid that executes the on/off control operation.

To execute the on/off control operation, therefore, it is desired to employ the setting similar to that of Fig. 6 making it possible to set the required attractive force to be low and to enhance the efficiency.

In the solenoid valve 400 of the constitution shown in Fig. 13 of the prior art, further, the rod 410f engaged with the bellows assembly 410, the rod 402d on the solenoid side formed integrally with the valve 403b, and the plunger 402b are separately constituted.

Besides, the rod 410f and the rod 402d of the solenoid side are held by using clearance seals CS401, CS402 (precise slide fitting) enabling the members to slide in the axial direction and preventing the leakage of the control fluid.

Further, the plunger 402b and the plunger chamber 402e must be precisely fitted together, requiring a highly precise machining in addition to those for the rod 410f and the rod 402d of the solenoid side.

In addition, sliding resistance of the clearance seals CS401, CS402 and of the plunger 402b, could cause a sliding hysteresis during the operation of the solenoid valve 400. In particular, the clearance seals CS01, CS402 could cause a fluid lock that may produce a large slide resistance.

In order for the plunger 402b to smoothly move in the plunger chamber 402e, further, a communication passage 404a must be provided to guide the crank chamber pressure Pc to the plunger chamber 402e.

SUMMARY OF THE INVENTION

The present invention was accomplished in order to solve the problem inherent in the above-mentioned prior art, and its object is to provide a solenoid valve which decreases the slide hysteresis and fluid locking in the slide portions at the time when the valve is driven in the valve control operation, and assures a stable and highly reliable operation.

The invention further provides a solenoid valve which exhibits spring constants in the solenoid valve, inclination of attractive force of the solenoid, and is capable of efficiently realizing the on/off control function and the proportional control function.

The solenoid valve of the invention comprises:

a valve body;
a valve allowed to move in the axial direction in said valve body and urged by urging means in a direction in which it opens or in a direction in which it closes
a solenoid having a plunger disposed on one side of the valve body of said valve in the axial direction thereof to urge said valve in the direction in which it closes; and

pressure response means disposed on the other side of the valve body of said valve in the axial direction thereof, to urge said valve in the direction in which it opens in response to the pressure; wherein

said valve and said plunger are constituted as a unitary structure; and

said unitary structure is supported by a slide support unit provided in said valve body facing a portion of said unitary structure on the side of the pressure response means, and by a slide support unit provided in said solenoid facing said plunger.

Thus, the valve and the plunger are constituted as a unitary structure which is slidably supported at both ends, i.e., supported at a portion on the side of the pressure response means and at the plunger at both ends of the unitary structure, decreasing the sliding resistance and realizing stable operation.

The present invention may be more fully understood from the description of a preferred embodiment set forth below, together with the accompanying drawings.

BRIEF DESCRIPTION OF THE DRAWINGS In the drawings:

Fig. 1 is a view illustrating the cross-sectional constitution of a solenoid valve according to a first embodiment of the present invention;

Fig. 2 is a graph illustrating a relationship between the load exerted on a valve and the position of the valve;

Fig. 3 is a diagram illustrating the support structure of pressure response means;

Fig. 4 is a view illustrating the cross-sectional constitution of a solenoid valve according to a second embodiment of the present invention;

Fig. 5 is a view illustrating the cross-sectional constitution of a solenoid value according to a prior art;

Fig. 6 is a graph illustrating a relationship between the load exerted on a valve and the position of the valve according to the prior art;

Fig. 7 is a graph illustrating a relationship between the load exerted on a valve and the position of the valve according to the prior art;

Fig. 8 is a view illustrating the cross-sectional constitution of a solenoid value according to the prior art;

Fig. 9 is a graph illustrating a relationship between the load exerted on a valve and the position of the valve according to the prior art;

Fig. 10 is a view schematically illustrating the constitution of a compressor;

Fig. 11 is a view illustrating a relationship of pressure related to the compressor;

Fig. 12 is a circuit diagram illustrating a pressure passage of the compressor; and

Fig. 13 is a view illustrating the cross-sectional constitution of a solenoid value according to the prior art.

DESCRIPTION OF THE PREFERRED EMBODIMENTS

(Embodiment 1)

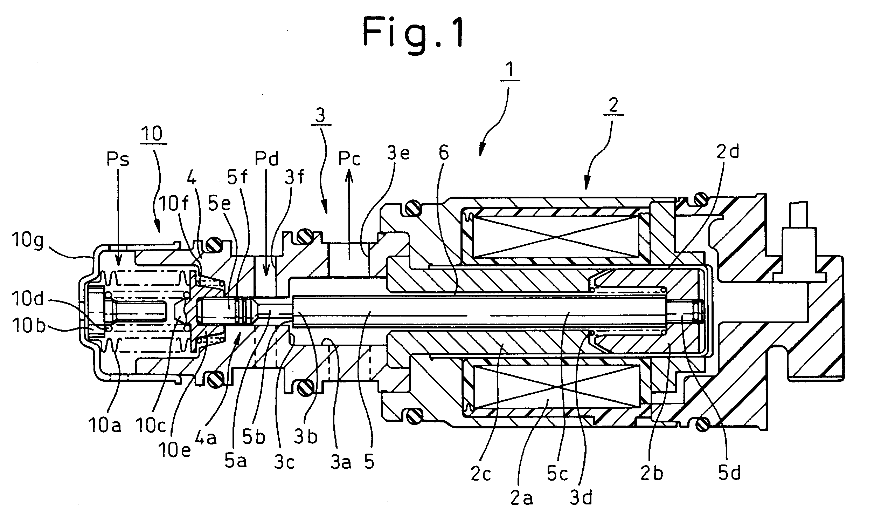

Fig. 1 is a view illustrating the cross-sectional constitution of a solenoid valve 1 of a first embodiment to which the present invention is adapted. The solenoid valve 1 is used for controlling the suction pressure Ps of a variable capacity pump (same as the compressor 300 described in the prior art) used in, for example, an air conditioning system of a vehicle, and is suitably employed for a compressor of the clutchless type that is controlled to be turned on and off by the solenoid valve 1.

The suction pressure Ps is controlled by controlling the discharge pressure Pd of the variable capacity pump and the crank chamber pressure Pc by opening and closing a valve unit 3 by utilizing a bellows assembly 10 which is a pressure response means that responds to the suction pressure Ps.

The solenoid valve 1 is constituted by a solenoid unit 2, the valve unit 3 and the bellows assembly 10.

The solenoid unit 2 is disposed at one end of a cylindrical valve body 4, generates a magnetic force when an electric current is supplied to a coil 2a to attract a plunger 2b by a center post 2c, thereby to produce an urging force (solenoid attractive force) of a magnitude corresponding to the electric current.

The opposing surfaces of the plunger 2b and the center post 2C have conical shapes to suppress a change in the thrust for each of the current levels, despite motion of the plunger, to accomplish a favorable proportional control.

The plunger 2b is slidably supported by the inner peripheral surface of the sleeve 2d, and smoothly slides in the axial direction along the inner peripheral surface of the sleeve 2d without play.

The valve unit 3 has a valve 3b in a valve chamber 3a formed in the valve body 4, the valve 3b being allowed to move in the axial direction in the valve chamber 3a so as to come into contact with, and to separate away from, a valve seat 3c opened in the valve chamber 3a. The valve 3b is urged in a direction in which it is opened by a spring 3d, which is an urging means, via a valve rod 5 that will be described later.

A port 3e that penetrates through the peripheral wall of the valve body 4 is connected to the valve chamber 3a of the valve unit 3, and a port 3f is connected to the valve seat 3c. The discharge pressure Pd of the variable capacity pump is introduced into the port 3f, and a crank chamber pressure PC obtained by controlling the discharge pressure Pd through the valve unit 3 is produced from the port 3e.

The valve 3b controls the pressure/flow rate depending upon the distance between the valve seat 3c and an end surface 5b facing a small-diameter portion 5a formed by contracting the diameter of part of the central portion of the valve rod which is a unitary structure slidably arranged in the inner cylindrical portion of the valve body 4.

The valve rod 5 has a solenoid-side rod 5c which is a connection member on the side of the solenoid 2 away from the valve 3b. The solenoid-side rod 5c penetrates through the inner cylindrical portion of the center post 2c to form an annular gap 6 (clearance) and is fitted and secured at its end 5d to the plunger 2b.

The valve rod 5 further has a bellows-side rod 5e which is a connection member on the side of the pressure response means close to the bellows assembly 10 and away from the valve 3b. The bellows-side rod 5e is slidably supported (clearance seal by accurate slide fitting) by the internal cylindrical portion 4a of the valve body 4 as a slide support, and the bellows-side rod 5e smoothly slides along the inner peripheral surface of the inner cylindrical portion 4a, in the axial direction, without play.

Annular grooves 5f (two grooves in this embodiment) are formed in the outer peripheral surface of the bellows-side rod 5e to suppress the fluid locking at the clearance seal.

The shape and number of the annular grooves 5f may be suitably set so that the transverse force (pressure in the radial direction/eccentric direction) exerted on the land portion will not affect the motion in the axial direction.

The bellows assembly 10 is disposed at the other end on the side opposite to the solenoid portion 2 of the valve body 4.

The bellows assembly 10 includes a sealed bellows core 10a of which the interior is evacuated or has a predetermined pressure, a stopper 10b for holding both ends of the bellows core 10a, and a spring 10d which extends in the holder 10c and in the bellows core 10a to give an urging force to prevent the collapse.

Reference numeral 10f denotes a holder spring which urges the holder 10c of the bellows assembly 10 toward the stopper 10b and holds the bellows assembly 10 by pushing it onto a recessed portion of a cover member 10g. The holder spring 10f and the recessed portion of the cover member 10g work as a holder means for holding the extension/contraction passage of the bellows assembly 10 in position relative to the valve 3b.

The valve 3b is urged to move in the direction in which it opens when the bellows core 10a extends or contracts in response to the ambient pressure (suction pressure Ps), and is extended by more than a predetermined length (when the suction pressure Ps has dropped) via the bellows-side rod 5e that is slidably held by the holding portion 10e.

Accordingly, the bellows assembly 10 does not come into engagement with the valve 3b to urge it throughout the whole opening/closing stroke of the valve 3b. Instead, the bellows-side rod 5e comes into engagement with the holding portion 10e in response to the suction pressure Ps up to at least a position halfway in the opening/closing stroke from the position at where the valve 3b is closed.

In this embodiment, further, the bellows assembly 10 does not engage with the valve 3b up to a position where the valve 3b is fully opened from the position halfway in the opening/closing stroke. If the valve-opening amount of the valve 3b is maintained, then, it may be brought into engagement throughout the whole stroke.

When the suction pressure Ps has increased to be larger than the predetermined pressure, the bellows core 10a contracts and is disengaged from the bellows-side rod 5e.

In the thus constituted solenoid valve 1, the valve rod 5 includes the valve 3b as well as the solenoid-side rod 5c and the bellows-side rod 5e on both sides thereof, and the solenoid-side rod 5c is a unitary structure being connected to the plunger 2b. Therefore, the valve rod 5 is supported at two points at its both ends by the inner peripheral surface of the sleeve 2d and by the inner cylindrical portion 4a of the valve body 4, and stably operates with a decreased slide resistance.

Further, the number of parts can be decreased, the assembling efficiency is improved, and the cost can be decreased.

An annular gap 6 is formed between the solenoid-side rod 5c of the valve rod 5 and the inner periphery of the center post 2c, whereby there is no slide motion between the solenoid-side rod 5c and the center post 2c decreasing the slide resistance. Besides, the annular gap 6 serves as a fluid communication passage assisting smooth motion of the plunger 2b in the plunger chamber.

When the spring constant of the spring 3d is denoted by Ksp, the inclination of the attractive force of the solenoid unit 2 by Ksol, and the spring constant of the bellows assembly 10 by Kb (inclusive of the urging force by the holder spring 10f), the solenoid valve 1 is so set as to establish the following relationships,

$$Kb + Ksp > Ksol$$

$$Ksol > Ksp$$

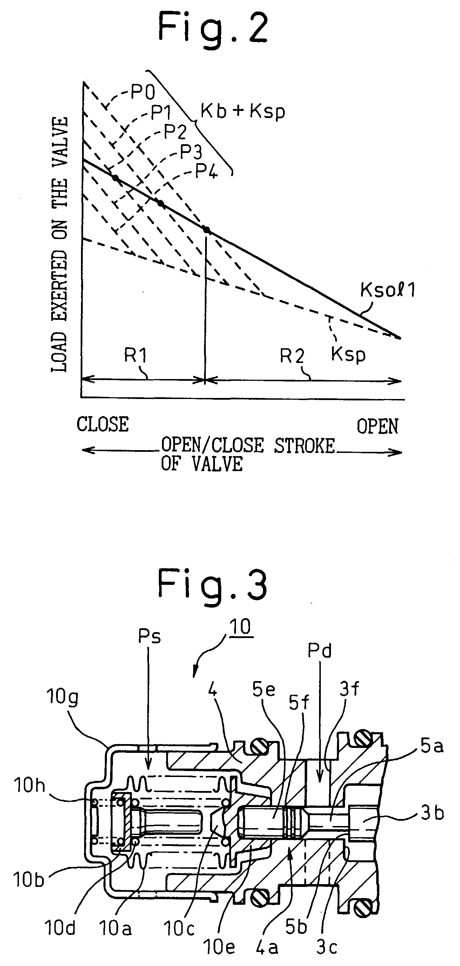

The operation of the solenoid valve 1 will now be described with reference to Fig. 2.,

Fig. 2 is a graph illustrating a relationship between the load exerted on the valve 3b and the position of the valve 3b, wherein the abscissa represents the opening/closing stroke (moving amount) of the valve 3b and the ordinate represents the load exerted on the valve 3b depending upon the stroke positions.

As for the load exerted on the valve 3b, three loads are exerted, i.e., urging force of the bellows assembly 10, urging force of the spring 3d and attractive force of the solenoid unit 2 from a position halfway in the opening/closing stroke of the valve 3b to the valve-closing side (region R1: pressure-adjusting region) in the case when the attractive force of the solenoid unit 2 is Ksol 1.

Two loads are exerted, i.e., the urging force of the spring 3d and the attractive force of the solenoid 2 from a position halfway in the opening/closing stroke of the valve 3b to the valve-opening side (region R2).

The position halfway in the opening/closing stroke is a position where there is substantially no engaging relationship between the valve 3b and the bellows assembly 10.

In the region R1 where three loads are exerted on the valve 3b, the valve 3b is opened and closed in a proportional manner based upon the pressure exerted on the bellows assembly 10.

The bellows assembly 10 undergoes a parallel translation Kb + Ksp (broken lines) depending upon the external pressure (P0 (low pressure) to P4 (high pressure)), and positions (black dots in Fig. 2) intersecting the solenoid attractive force (solid line) produced by a predetermined current are those positions where the valve 3b opens.

In the region R2 where the two loads only are imparted to the valve 3b, the solenoid attractive force exceeds the urging force of the spring 3d over a range from the position where the valve is fully opened to a position halfway in the opening/closing stroke due to the relationship Ksol > Ksp when the solenoid attractive force exceeds the urging force of the spring 3d at the position where the valve is fully opened, and the valve 3b moves at once up to the position halfway in the opening/closing stroke, executing the open/close control operation based upon the on/off control.

Therefore, the solenoid attractive force at the position where the valve is fully opened needs not be set to be large relative to the load of the spring 3d at the same position, and the solenoid can be realized in a small size to suppress the consumption of electric current.

The solenoid attractive force can be changed by an electric current that is supplied, and has been adjusted to a predetermined value to exhibit desired output characteristics that meet the value Kb + Ksp.

Described below is the practical control operation for the compressor in which the solenoid valve 1 is incorporated under the operation conditions described above.

During the normal operation of the compressor, the bellows assembly 10 of the solenoid valve 1 receives the suction pressure Ps. When the suction pressure Ps increases, the bellows core 10a contracts toward the left in the drawing. When the suction pressure Ps decreases, the bellows core 10a extends toward the right in the drawing.

In the state (region R1 in Fig. 2) where the pressure is thus adjusted, the bellows assembly 10 is engaged with the valve 3b via the bellows-side rod 5e. Due to urging force of the bellows core 10a, the urging force of the spring 3d and the attractive force of the solenoid which are balanced, therefore, the valve 3b moves thereby to control the flow rate of the fluid of the discharge pressure Pd that is flowing from the port 3f into the port 3e.

The crank chamber pressure Pc fed from the port 3e is adjusted to adjust the output of the variable capacity pump and, thus, the suction pressure Ps of the variable capacity pump is automatically adjusted.

To increase the discharge pressure Pd from the compressor, for example, the angle θ of inclination of the swash plate 302 must be increased. For this purpose, however, the valve 3b of the solenoid valve 1 must be closed to decrease the crank chamber pressure Pc.

In the control operation by changing the attractive force of the solenoid valve 1, the solenoid valve 1 maintains the relationship Ksol > Ksp in the region R2 from the valve-opening side up to a position halfway in the opening/closing stroke of the valve 3b. At the moment when the attractive force of the solenoid exceeds the urging force of the spring 3d at the position where the valve is fully opened, therefore, the valve 3b moves at once from the position where the valve is fully opened up to a position halfway in the stroke where the valve 3b and the bellows assembly 10 come into engagement, thereby to execute the open/close control operation.

Therefore, the valve-closing operation in which the valve 3b moves from the valve-opening side up to a position halfway in the stroke, is quickly accomplished to enhance the response of the compressor at the start of its operation.

In the region R1 in Fig. 2, the valve 3b in the solenoid valve 1 stays in a state (balance control) where the urging force of the spring 3d, the attractive force of the solenoid and the urging force of the bellows assembly 10 are balanced, to control the flow rate of the fluid.

In the state where the balance of the fluid is controlled, the valve 3b in the solenoid valve 1 is often closed when the bellows core 10a is contracted leftward in the drawing due to a rise in the suction pressure Ps or when the attractive force of the solenoid valve 1 is increased.

When the valve 3b is closed, the flow rate of the fluid flowing into the crank case at pressure Pc from the discharge pressure Pd becomes smaller than the flow rate between Pc - Ps due to an orifice 305 (see Fig.

12) in the compressor 300 (even when the valve is closed, the flow of fluid is not 0 but the fluid leaks through the valve 3b), and a relationship "crank case pressure Pc = suction pressure Ps" is established.

Upon adjusting the attractive force of the solenoid relying on the balance control and the Pc = Ps control when the valve is closed, it becomes possible to finally set the suction pressure Ps (i.e., blow-out temperature).

At the time when the compressor starts driving (see Figs. 10, 11 and 12), the crank chamber pressure Pc becomes equal to the Suction pressure Ps through the orifice 305, and the angle θ of inclination of the swash plate 302 becomes almost 0 due to the resilient force of a spring (not shown) that works to decrease the angle of inclination.

When incorporated in the compressor, the solenoid valve 1 operates as described above to efficiently execute the two control operations, i.e., a proportional control operation and an on/off control operation depending upon the pressure of the fluid that is to be controlled.

The embodiment employs separation/connection means in which the holding portion 10e and the bellows-side rod 5e are slidably fitted together, and the urging force of the bellows assembly 10 is given to the bellows-side rod 5e only when their opposing surfaces are in contact with each other. This prevents the generation of a force that urges the valve 3b in the direction in which it closes when the bellows assembly 10 is contracted in excess of a state where the valve 3b is closed.

This is to suppress such an occurrence that when the compressor is of the clutchless type, the operation for opening the valve 3b is affected when the contracting force of the bellows assembly 10 urges the valve 3b in the direction in which it closes in the case when the compressor is at rest.

It is also possible to connect and secure the bellows-side rod 5e and the holding portion 10e of the bellows assembly 10 by, for example, press-in fitting instead of employing separation/connection means.

In this case, it could happen that the stopper 10b separates away from the cover member 10g (it is desired that the size of the bellows assembly 10 is, in practice, so set as to avoid such an occurrence) when the bellows assembly 10 contracts to a large extent. However, since the bellows assembly 10 has been held on one side by at least the bellows-side rod 5e, no particular holder means (holder spring 10f or holder spring 10h shown in Fig. 3 that will be described later) is required.

As shown in Fig. 3, further, it is also possible to employ a constitution in which the bellows assembly 10 is held relative to the cover member 10g while being urged by the holder spring 10h, which is an urging member, in the direction in which it opens, thereby to absorb the extension of the bellows assembly 10. In this case, the holder spring 10f shown in Fig. 1 is not necessary.

When the solenoid valve 21 is to be adapted to a compressor with clutch, however, there is no need to close the valve 3b. Therefore, the above-mentioned constitution for separating the holder portion 10e and the bellows-side rod 5e, and urging based on the holder spring 10h may be omitted.

(Embodiment 2)

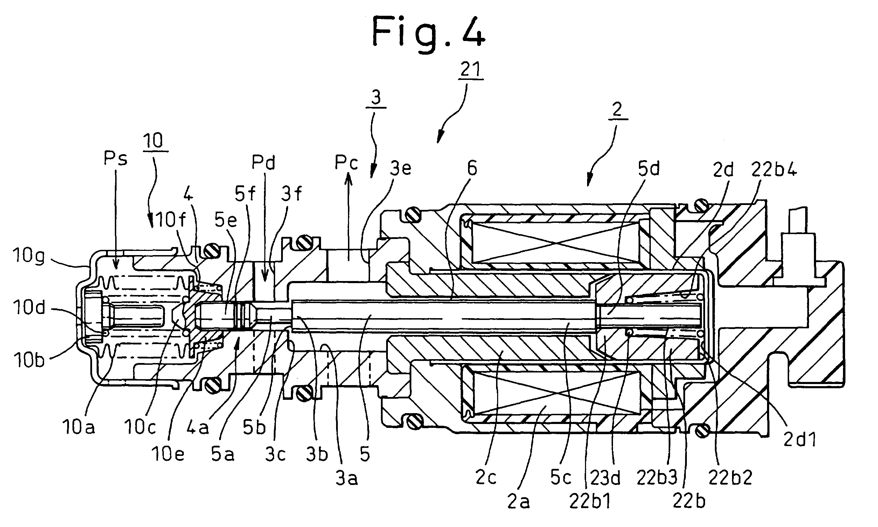

Fig. 4 is a view illustrating the cross-sectional constitution of a solenoid valve 21 according to a second embodiment. In Fig. 4, the constituent elements same as those of the first embodiment are denoted by the same reference numerals, and the description refers to that of the first embodiment.

Unlike that of the first embodiment, the solenoid valve 21 is suited for the compressor with clutch that does not require on/off control function for the solenoid valve.

The solenoid valve 21 has a characteristic constitution in that a spring 23d which is means for urging the valve 3b urges the valve rod 5 in a direction in which the valve 3b closes.

This is the constitution for accomplishing the control functioning with a small current (0 A) without producing the attractive force of the solenoid valve, since the on/off control function is not required.

That is, an end 22b1 of the plunger 22b on the side of the center post 2c is fitted and secured to the end 5d of the solenoid-side rod 5c, and an inner-diameter portion 22b3 larger than the outer diameter of the end 5d is formed from an end surface 22b2 facing the bottom 2d1 of the sleeve 2d thereby to form an annular groove 22b4.

A spring 23d is held while being compressed between the annular groove 22b4 and the bottom 2d1 of the sleeve 2d to urge the valve rod 5.

Due to this constitution, a response to the suction pressure Ps is obtained by utilizing a change in the suction pressure Ps even in a state where no electric current is supplied to the solenoid unit 2, and the valve 3b is balance-controlled even when no electric current is supplied to the solenoid unit 2. In other words, the valve-opening state can be set over a range of from zero solenoid attractive force F through up to a maximum of electric current, to efficiently utilize the solenoid attractive force F.

According to the present invention as described above, the valve in the solenoid valve stably operates with decreased slide resistance, making it possible to obtain a solenoid valve that operates highly reliably.

It is further allowed to decrease the number of parts, to improve the assembling efficiency, and to decrease the cost.

Since an annular gap is formed between the inner circumference of the center post and the outer circumference of the connection member of the side of the solenoid, there is no slide motion between the connection member on the side of the solenoid and the center post, contributing to decreasing the slide resistance. Besides, the annular gap is used as the fluid passage assisting the smooth motion of the plunger in the plunger chamber.

Provision of the annular grooves in the outer periphery of the connection member on the side of the pressure response means prevents fluid locking between the connection member on the side of the pressure response means and the slide support unit.

In order to efficiently realize the on/off control function and the proportional control function, further, a relationship is maintained among the spring constants of the solenoid valve and the inclination of attractive force of the solenoid. In the state where the pressure response means is not engaged with the valve and is not urging it, the valve is opened and closed based on the on/off control operation relying upon the relationship Ksol > Ksp. In the state where the pressure response means is engaged with the valve and is urging it, the valve is opened and closed by the proportional control operation based on the pressure in compliance with the relationship Kb + Ksp > Ksol .

Upon specifying the engaging state between the pressure response means and the valve, the valve is positioned on the valve-opening side in the state where no current is supplied to the solenoid. When the current is supplied to the solenoid in this state, the valve moves at once from the position where the valve is fully opened up to a position halfway in the stroke where the valve engages with the pressure response means when the attractive force of the solenoid exceeds the urging force of the urging means at the position where the valve is fully opened due to the relationship Ksol > Ksp, so that the valve is opened and closed by the on/off control operation. From the position halfway in the stroke up to the valve-closing side, the valve is opened and closed by the proportional control operation depending upon the pressure.

Therefore, the attractive force of the solenoid at the position where the valve is fully opened need not be set to be large relative to the load of the urging means at the same position, and the solenoid can be realized in a small size and the consumption of electric current can be suppressed.

Further, since the valve is urged by the urging means in the direction in which it closes, the valve can be balance-controlled even when no current is supplied to the solenoid, and the attractive force of the solenoid can be set from 0 up to a state where the valve is opened with a maximum electric current. Thus, the attractive force of the solenoid is efficiently utilized and, besides, the solenoid is realized in a small size.

While the invention has been described by reference to specific embodiments chosen for purposes of illustration, it should be apparent that numerous modifications could be made thereto by those skilled in the art without departing from the basic concept and scope of the invention.

**Claims**

1. A solenoid valve comprising:

   a valve body;
   a valve allowed to move in the axial direction in said valve body and urged by urging means in a direction in which it opens or in a direction in which it closes
   a solenoid having a plunger disposed on one side of the valve body of said valve in the axial direction thereof to urge said valve in the direction in which it closes; and
   pressure response means disposed on the other side of the valve body of said valve in the axial direction thereof, to urge said valve in the direction in which it opens in response to the pressure; wherein
   said valve and said plunger are constituted as a unitary structure; and
   said unitary structure is supported by a slide support unit provided in said valve body facing a portion of said unitary structure on the side of the pressure response means, and by a slide support unit provided in said solenoid facing said plunger.

2. A solenoid valve according to claim 1, further comprising a connection member on the side of the solenoid to connect the valve to the plunger, wherein said solenoid has a center post surrounding the connection member on the side of the solenoid, and an annular gap is formed between the inner periphery of said center post and the outer periphery of the connection member on the side of the solenoid.

3. A solenoid valve according to claim 1, wherein a connection member is provided at a portion on the side of said pressure response means to connect said valve to said pressure response means, and annular grooves are formed in the outer periphery of said connection member.

4. A solenoid valve according to claim 2, wherein a connection member is provided at a portion on the side of said pressure response means to connect said valve to said pressure response means, and annular grooves are formed in the outer periphery of said connection member.

5. A solenoid valve according to claim 1, wherein said valve is urged by said urging means in a direction in which it closes, and when a spring constant of said urging means is denoted by Ksp, an inclination of the attractive force of said solenoid by Ksol and a spring constant of said pressure response means by Kb, then, a relationship,

$$Kb + Ksp > Ksol$$

is maintained.

6. A solenoid valve according to claim 1, wherein said valve is urged by said urging means in a direction in which it closes, and when a spring constant of said urging means is denoted by Ksp, an inclination of the attractive force of said solenoid by Ksol and a spring constant of said pressure response means by Kb, then, relationships,

$$Kb + Ksp > Ksol$$

$$Ksol > Ksp$$

are maintained.

7. A solenoid valve according to claim 6, wherein said pressure response means engages with said valve to urge it from a position where the valve is closed up to a position halfway in the opening/closing stroke, but does not engage with said valve and does not urge it from the position halfway in the opening/closing stroke of the valve up to a position where the valve is fully opened.

8. A solenoid valve according to claim 7, comprising:

said pressure response means that extends and contracts depending upon the pressure; holder means for determining the extension/contraction passage of said pressure response means in position relative to said valve; and separation/connection means interposed between said valve and said pressure response means; wherein said pressure response means does not urge the valve in the direction in which it closes.

9. A solenoid valve according to claim 6, wherein a connection member is integrally provided on a portion of said unitary structure on the side of said pressure response means to connect said valve to said pressure response means, said connection member being connected and secured to said pressure response means that extends and contracts depending upon the pressure.

# Fig.1

# Fig.2

# Fig.3

# Fig. 4

# Fig.5

# Fig.6

SPRING FORCE (Ksp)

SOLENOID ATTRACTIVE FORCE (S0)
SOLENOID ATTRACTIVE FORCE (S1)
SOLENOID ATTRACTIVE FORCE (S2)
SOLENOID ATTRACTIVE FORCE (S3)

(Ksol)

LOAD
$\begin{pmatrix}\text{SOLENOID ATTRACTIVE}\\\text{FORCE, SPRING FORCE}\end{pmatrix}$

ON(CLOSING)SIDE

OFF(OPENING)SIDE

STROKE

# Fig.7

LOAD
(SOLENOID ATTRACTIVE
FORCE,SPRING FORCE)

SPRING FORCE (Ksp)

SOLENOID ATTRACTIVE FORCE (S0)
SOLENOID ATTRACTIVE FORCE (S1)
SOLENOID ATTRACTIVE FORCE (S2)
SOLENOID ATTRACTIVE FORCE (S3)

$( Ksol )$

ON(CLOSING)SIDE          OFF(OPENING)SIDE

STROKE

EP 1 069 358 A2

# Fig.8

# Fig.9

# Fig.10

300

PISTON
STROKE

ANGLE θ OF INCLINATION
OF SWASH PLATE

ℓ

θ

303

301

302

# Fig.11

303    302

Ps

Pd

Pc

301

# Fig.12

300

Ps    Pc    Pd

305

200

Ps

# Fig.13

400

403

402

410

Ps

CS401

Pc 404

Pd

404a

CS402

410b

402b

402e

410d

410a 410c 410f 403c
410e 403f

403e 403d
403a 403b

402d 402c 402a

EP 1 069 358 A2